# EUROPÄISCHE PATENTSCHRIFT

(11) **EP 2 259 887 B1**
(45) Veröffentlichungstag und Bekanntmachung des Hinweises auf die Patenterteilung: **14.12.2016**
(21) Anmeldenummer: 09714804.3
(22) Anmeldetag: 27.02.2009
(51) Int. Cl.: B22F 9/02, B22F 9/22, C22C 16/00, C01G 25/02, C22B 34/12, C22B 34/14, C22C 1/04, B22F 9/20, C22C 27/04, C22B 5/04

(54) **VERFAHREN ZUR HERSTELLUNG VON LEGIERUNGSPULVERN AUF DER BASIS VON ZIRKON, LEGIERT MIT DEN ELEMENTEN Hf UND W**
METHODS FOR MANUFACTURING ALLOY POWDERS BASED ON ZIRCONIUM, ALLOYED WITH THE ELEMENTS Hf AND W
PROCÉDÉS DE PRÉPARATION DE POUDRES D'ALLIAGES À BASE DE ZIRCONIUM ASSOCIÉS AUX ÉLÉMENTS Hf ET W

(30) Priorität: 28.02.2008 DE 102008000433
(43) Veröffentlichungstag der Anmeldung: 15.12.2010
(60) Teilanmeldung: 12190943.6
(73) Patentinhaber: Chemetall GmbH, 60487 Frankfurt (DE)
(72) Erfinder: KARACA, Ahmet, 38640 Goslar (DE); SERMOND, Bernd, 35614 Aßlar (DE); WILFING, Gerhard, 35091 Cölbe (DE)
(74) Vertreter: Rottmayer, Hans
(86) Internationale Anmeldenummer: PCT/EP2009/052336
(87) Internationale Veröffentlichungsnummer: WO 2009/106600

(56) Entgegenhaltungen:
- WO-A-2005/007906
- WO-A-2006/089222
- US-A1- 2004 022 722

## Beschreibung

Die Erfindung betrifft ein Verfahren zur Herstellung von Legierungspulvern auf der Basis von Zirconium legiert mit W.

Legierungspulver auf der Basis von Titan, Zirconium und Hafnium werden in der Pyroindustrie, bei der Herstellung von elektrischen Zündern, beispielsweise in Airbags und Zündverzögerungselementen, als Gettermaterialien in Vakuumröhren, in Lampen, in Vakuumapparaturen und in Gasreinigungsanlagen eingesetzt. Wegen der sehr hohen Anforderungen an die Zuverlässigkeit der oben genannten Produkte, beispielsweise Airbagzünder, ist es wünschenswert, die Legierungspulver von Charge zu Charge reproduzierbar mit gleichbleibenden Eigenschaften herzustellen, insbesondere in Bezug auf Brennzeit, Zündpunkt, mittlere Korngröße, Korngrößenverteilung und Oxidationswert. Außerdem ist es wünschenswert, die genannten Eigenschaften von vornherein auf bestimmte Werte einstellen zu können.

Die Herstellung der Legierungspulver kann durch ein kombiniertes Reduktions- und Legierungsverfahren erfolgen. Dazu wird das Oxid von Titan (TiO₂), Zirconium (ZrO₂) und/oder Hafnium (ZrO₂) zusammen mit den pulverförmigen Legierungselementen und einem Reduktionsmittel wie Calcium und/oder Calciumhydrid und/oder Magnesium und/oder Barium reduziert. Die Reduktion wird in einem geschlossenen, inertisierbaren Gefäß durchgeführt. Das oder die Reduktionsmittel werden in der Regel im Überschuss zugegeben. Nach der Reduktion werden die entstandenen Reduktionsmitteloxide durch Laugen mit Säure und nachfolgendem Waschen mit Wasser entfernt. Der Sauerstoffgehalt der erhaltenen Metalllegierungspulver liegt bei diesem Verfahren zwischen 1 und 5 %. Das Dokument WO 2006/089222 A2 beschreibt ein solches Verfahren zur Herstellung von Legierungen. Weiterhin ist aus dem Dokument WO 2005/007906 A1 ein Verfahren zur Herstellung von Metallpulvern der Elemente Ti, Zr, Hf, V, Nb, Ta und Cr bekannt, bei dem ein Oxid dieser Elemente mit einem Reduktionsmittel gemischt und diese Mischung in einem Ofen erhitzt wird, bis die Reduktionsreaktion beginnt, das Reaktionsprodukt gelaugt wird und anschließend gewaschen und getrocknet wird, wobei das eingesetzte Oxid eine durchschnittliche Korngröße von 0,5 bis 20 µm, eine spezifische Oberfläche nach BET von 0,5 bis 20 m²/g sowie einen Mindestgehalt von 94 Gew.-% aufweist.

Alternativ können die Legierungspulver auf der Basis von Ti, Zr, Hf aus dem jeweiligen Metall durch Hydrieren und Dehydrieren gewonnen werden (HDH-Verfahren). Das jeweilige Metall wird hydriert und kann in dieser dann spröden Form zu Pulver der gewünschten Feinheit mechanisch zerkleinert werden. Um Schädigungen durch Aufnahme von Sauerstoff und Stickstoff zu vermeiden, muss zur Hydrierung hoch reiner Wasserstoff verwendet werden. Die Zerkleinerung des hydrierten Metalls auf die gewünschte Korngröße muss ebenfalls in einer reinen Schutzgasatmosphäre erfolgen, beispielsweise Helium oder Argon. Zur nachfolgenden Entfernung des Wasserstoffs und Bildung der Legierung wird das Titan-, Zirconium- oder Hafnium-Metallhydridpulver und das jeweilige zu legierende Metallhydridpulver oder Metallpulver im Vakuum bei erhöhter Temperatur zersetzt und gleichzeitig legiert.

Von Nachteil der so hergestellten Legierungspulver ist unter anderem, dass diese keine reproduzierbare Brennzeit, keine reproduzierbare spezifische Oberfläche, keine reproduzierbare Korngrößenverteilung und keinen reproduzierbaren Zündpunkt aufweisen.

Aufgabe der Erfindung ist es, feinteiligere Legierungspulver mit reproduzierbaren Zündpunkten und Brennzeiten herzustellen, deren pyrotechnischen Eigenschaften mit bekannten Zirkoniumpulvern vergleichbar sind.

Es wird ein Pulver einer Zirconiumlegierung vorgestellt, das eine Brennzeit von 4 s/50 cm (Sekunde pro 50 cm) bis 2000 s/50 cm und einen Zündpunkt von 160 °C bis 400 °C und in Einzelfällen darüber hinaus aufweist. Die Brennzeit, ausgedrückt in s/50 cm, wird dabei wie folgt bestimmt: Die zu prüfende Substanz wird zunächst zur Beseitigung störender Agglomerate über zwei Siebe mit Maschenweiten von 250 µm und 45 µm abgesiebt. Gegebenenfalls kann die Probe dabei mit einem Pinsel vorsichtig bewegt werden. Zur Bestimmung der Brennzeit wird das Feingut verwendet, welches das 45 µm-Sieb passiert hat. 15 g der Probe werden lose auf eine folgend beschriebene Metallrinne gegeben, mit einer Pappkarte glatt gestrichen und der Überschuss durch Abstreifen entfernt. Die Metallrinne ist mit zwei Markierungen versehen, die in einem Abstand von 500 mm voneinander angebracht sind. Vor der Anfangsmarkierung wird zusätzlich eine etwa erbsengroße Substanzmenge aufgetragen und mit einem Brenner entzündet. Mit Hilfe einer Zeitaufnahme wird nun die Zeit ermittelt, die der Brennvorgang zum Durchlaufen der Strecke zwischen Anfangs- und Endmarkierung benötigt. Das Analysenergebnis der Brennzeit wird in der Dimension [s/50 cm] (Sekunde pro 50 cm) angegeben. Die Brennrinne mit den Abmessungen 3 mm x 2 mm ist in einen Flachstahl mit den Abmessungen 40 mm x 9,4 mm x 600 mm eingearbeitet.

Der Zündpunkt wird dabei wie folgt bestimmt: 10 g der zu prüfenden Substanz werden in einen vorgewärmten, so genannten "Zündblock" eingebracht und es wird die Temperatur gemessen, bei der Selbstzündung eintritt. Der Zündblock, bestehend aus einem eisernen Würfel mit einer Kantenlänge von 70 mm mit Material- und Thermoelementbohrungen (20 mm und 8 mm Durchmesser, jede Bohrung 35 mm tief, Abstand der Bohrungsmittelpunkte: 18 mm), wird nach Einsetzen des Thermometers oder Thermoelements in die dafür vorgesehene Bohrung mit einem Gebläsebrenner auf eine knapp unterhalb der Zündtemperatur liegende Temperatur vorgeheizt. Dieser Punkt wird durch eine Vorprobe ermittelt. In die Materialbohrung des vorgeheizten Zündblockes wird nun eine Spatelspitze (10 g) des zu untersuchenden Metallpulvers oder Hydrides eingetragen und der Block mit maximaler Gebläseflamme so lange erhitzt, bis das Pulver sich von selbst entzündet. Die dabei erreichte Temperatur ist der Zündpunkt.

Weiterhin ist es wünschenswert, dass die Metalllegierungspulver einen Gehalt von mindestens 75 Gew.-% Metall, bevorzugt mindestens 88 Gew.-%, besonders bevorzugt mindestens 90 Gew.-%, einen mittleren Korndurchmesser von 1 bis 15 µm, eine bevorzugte Korngrößenverteilung d50 (gemessen mittels Laserbeugung) von 1 bis 20 µm und eine spezifische Oberfläche nach BET von 0,2 bis 5 m²/g aufweisen.

Der mittlere Korndurchmesser wird mit einem "Fisher Sub-Sieve Size Korngrößenbestimmer" (im folgenden FSSS genannt) bestimmt. Eine Beschreibung dieser Messmethode findet sich in den "Instructions, Fisher Model 95 Sub-Sieve Sizer, Catalog No. 14-311, Part No. 14579 (Rev. C), published 01-94" von Fisher Scientific. Auf diese Messbeschreibung wird hier ausdrücklich Bezug genommen.

Gelöst wird die Aufgabe durch ein Verfahren zur Herstellung von Legierungspulvern auf der Basis von Zirconium legiert mit W, bei dem 21,6 kg ZrO2 mit folgenden Eigenschaften: ZrO2 + HfO2 min. 99,0%, HfO2 1,0 bis 2,0 %, SiO2 max. 0,5 %, TiO2 max. 0,3 %, Fe2O3 max. 0,1 %, Glühverlust max. 0,5 %, mittlere Korngröße 4 bis 6 µm, Anteil an monocliner Kristallstruktur min. 96 %, spezifische Oberfläche 0,5 bis 1,5 m2/g und 16,0 kg Wolfram-Metallpulver mit folgenden Eigenschaften: W min. 99,95 %, Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße 0,7 µm ± 0,1 µm, Klopfdichte 0,150 bis 0,220 dm3/kg, Schüttdichte 0,570 bis 0,740 g/l und 31,5 kg Calcium in Form von Granulat mit folgenden Eigenschaften: Ca min. 99,3 %, Mg max. 0,7 %, zusammen in einem Mischfass 20 Minuten unter Argonatmosphäre gemischt und das Gemisch in einen Behälter eingetragen, der Behälter in einen Ofen eingesetzt, der nachfolgend verschlossen und mit Argon bis zu einem Überdruck von 100 hPa gefüllt wird, wobei der Reaktionsofen in einer Stunde auf eine Temperatur von ca. 1250 °C aufgeheizt, sechzig Minuten nach dem Einschalten der Ofenheizung diese wieder abgeschaltet und nachdem die Temperatur auf < 50 C° gefallen ist, die Reaktionsmasse aus dem Tiegel entfernt und mit konzentrierter Salzsäure ausgelaugt wird, wobei eine Zirconium/Wolfram-Metallpulverlegierung erhalten wird mit folgender Analyse: 96,1 % Zr + Hf + W, 2,2 % Hf, 0,7 % O, 0,06 % H, 0,38 % Mg, 0,076 % Fe, 0,25 % Al, 1,2 µm mittlere Korngröße, Korngrößenverteilung d50: 2,8 µm, spezifische Oberfläche: 0,5 m2/g, Zündpunkt: 220 °C, Brennzeit: 55 s/50 cm.

Alternativ wird die Aufgabe gelöst durch ein Verfahren zur Herstellung von Legierungspulvern auf der Basis von Zirconium legiert mit W, bei dem 16,2 kg ZrO2 mit folgenden Eigenschaften: ZrO2 + HfO2 min. 99,0 %, HfO2 1,0 bis 2,0 %, SiO2 max. 0,2 %, TiO2 max. 0,25 %, Fe2O3 max. 0,02 %, Glühverlust max. 0,4 %, mittlere Korngröße 3 bis 5 µm, Anteil an monocliner Kristalistruktur min. 96 %, spezifische Oberfläche 3,0 bis 4,0 m2/g und 12,0 kg Wolfram-Metallpulver mit folgenden Eigenschaften: W min. 99,95 %, Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße 0,7 ± 0,1 µm, Klopfdichte 0,150 bis 0,220 dm3/kg, Schüttdichte 0,570 bis 0,740 g/l und 7,2 kg Mg in Form von Spänen mit folgenden Eigenschaften: Mg min. 99,5 %, Schüttdichte max. 0,3 bis 0,4 g/cm3, zusammen in einem Mischfass 20 Minuten gemischt und in einem Behälter in einen Ofen eingesetzt, der nachfolgend verschlossen und mit Argon bis zu einem Überdruck von 100 hPa gefüllt wird, wobei der Reaktionsofen in einer Stunde auf eine Temperatur von 1050 °C aufgeheizt, sechzig Minuten nach dem Einschalten der Ofenheizung diese wieder abgeschaltet und nachdem die Temperatur auf < 50°C gefallen ist, die Reaktionsmasse aus dem Tiegel entfernt und mit konzentrierter Salzsäure ausgelaugt wird, wobei eine Zirconium/Wolfram-Metallpulverlegierung erhalten wird mit folgender Analyse: 97,9% Zr + Hf + W, 53 % Zr, 0,9 % Hf, 44 % W, 0,083 % Fe, 0,075 % Al, 0,19 % Mg, 0,087 % Si, 0,04 % H, mittlere Korngröße 1,2 µm, Korngrößenverteilung d50: 2,6 µm, Zündpunkt: 200 °C, Brennzeit: 44 s/50 cm.

Weiterhin wird die Aufgabe gelöst durch ein Verfahren zur Herstellung von Legierungspulvern auf der Basis von Zirconium legiert mit W, bei dem 13,0 kg ZrO2 mit folgenden Eigenschaften: ZrO2 + HfO2 min. 99,0 %, HfO2 1,0 bis 2,0 %, SiO2 max. 0,2 %, TiO2 max. 0,25 %, Fe2O3 max. 0,02 %, Glühverlust max. 0,4 %, mittlere Korngröße 3 bis 5 µm, Anteil an monocliner Kristallstruktur min. 96 %, spezifische Oberfläche 3,0 bis 4,0 m2/g und 14,4 kg W Metallpulver mit folgenden Eigenschaften: W min. 99,95 %, Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße 0,7 ± 0,1 µm, Klopfdichte 0,150 bis 0,220 dm3/kg, Schüttdichte 0,570 bis 0,740 g/l und 5,8 kg Mg in Form von Spänen mit folgenden Eigenschaften: Mg min. 99,5 %, Schüttdichte max. 0,3 bis 0,4 g/cm3, zusammen in einem Mischfass 20 Minuten unter Argonatmosphäre gemischt und in einem Behälter in einen Ofen eingesetzt, der nachfolgend verschlossen und mit Argon bis zu einem Überdruck von 100 hPa gefüllt wird, wobei der Reaktionsofen in einer Stunde auf eine Temperatur von 1050 °C aufgeheizt, sechzig Minuten nach dem Einschalten der Ofenheizung diese wieder abgeschaltet und nachdem die Temperatur auf < 50 °C gefallen ist, die Reaktionsmasse aus dem Tiegel entfernt und mit konzentrierter Salzsäure ausgelaugt wird, wobei eine Zirconium/Wolfram-Metallpulverlegierung erhalten wird mit folgender Analyse: 97,8 % Zr + Hf + W, 41 % Zr, 0,78 % Hf, 56 % W, 0,028 % Fe, 0,090 % Al, 0,14 % Mg, 0,097 % Si, 0,14 % H, 1,2 µm mittlere Korngröße, Korngrößenverteilung d50: 2,2 µm, Zündpunkt: 200 °C, Brennzeit: 37 s/50 cm.

Der Anteil an Fe- und Al-Verunreinigungen im Oxid beträgt bevorzugt jeweils < 0,2 Gew.-%, besonders bevorzugt < 0,08 Gew.-% (jeweils gerechnet als Oxid). Der Anteil an Si-Verunreinigungen im Oxid beträgt bevorzugt < 1,5 Gew.-%, besonders bevorzugt < 0,1 Gew.-% (gerechnet als SiO₂). Der Anteil an Na-Verunreinigungen im Oxid beträgt bevorzugt < 0,05 Gew.-% (gerechnet als Na₂O). Der Anteil an P-Verunreinigungen im Oxid beträgt bevorzugt < 0,2 Gew.-% (gerechnet als P₂O₅). Der Glühverlust des Oxids bei 1000 °C (Gewichtskonstanz) beträgt bevorzugt < 1 Gew.-%, besonders bevorzugt < 0,5 Gew.-%. Die Stampfdichte nach EN ISO 787-11 (früher DIN 53194) des Oxids beträgt bevorzugt 800 bis 1600 kg/m³.

Es wurde gefunden, dass durch die gezielte Auswahl der oxidischen Rohstoffe mit den beschriebenen Eigenschaften und anschließender Durchführung des Verfahrens Produkte erhalten werden, die eine Brennzeit von 10 s/50 cm bis 3000 s/50 cm, eine Zündenergie von 1 µJ bis 10 mJ, eine mittlere Korngröße von 1 bis 8 µm, eine spezifische Oberfläche nach BET von 0,2 bis 5 m²/g, einen Zündpunkt von 160 °C bis 400 °C und in Einzelfällen darüber hinaus aufweisen, wobei jeweils reproduzierbare Korngrößenverteilungen erhalten werden. Die Kombination von durchschnittlicher Korngröße und spezifischer Oberfläche in den jeweils angegebenen Bereichen der oxidischen Ausgangsverbindung führt zusammen mit dem angegebenen Mindestgehalt zum gewünschten Produkt.

Als Reduktionsmittel können bevorzugt eingesetzt werden: Erdalkalimetalle und Alkalimetalle. Besonders bevorzugt sind Magnesium, Calcium und Barium oder definierte Mischungen davon. Bevorzugt hat das Reduktionsmittel einen Mindestgehalt von 99 Gew.-%, besonders bevorzugt von 99,5 Gew.-%.

Je nach Anteil des Legierungsmittels werden pulverförmige reine Metalllegierungspulver, erhalten. Je höher der Anteil des Legierungselements des Verfahrensproduktes ist, desto größer ist die Brennzeit, d.h. das Metalllegierungspulver brennt langsamer, und desto höher ist der Zündpunkt (Metalllegierungspulver zündet bei höheren Temperaturen) und jeweils umgekehrt.

Die Laugung des Reaktionsproduktes wird bevorzugt mit konzentrierter Salzsäure vorgenommen, die besonders bevorzugt in geringem Überschuss eingesetzt wird.

Die Erfindung wird im Folgenden an Hand von Beispielen näher erläutert:

### Beispiel 1: Herstellung eines Zirconium/Wolfram-Legierungspulvers, Zielzusammensetzung 50/50 (Zr/W)

21,6 kg ZrO₂ (pulverförmiges Zirconiumoxid, natürlicher Baddeleyit) mit folgenden Eigenschaften: ZrO₂ + HfO₂ min. 99,0%, HfO₂ 1,0 bis 2,0 %, SiO₂ max. 0,5 %, TiO₂ max. 0,3 %, Fe₂O₃ max. 0,1 %, Glühverlust max. 0,5 %, mittlere Korngröße (FSSS) 4 bis 6 µm, Anteil an monocliner Kristallstruktur min. 96 %, spezifische Oberfläche (nach BET) 0,5 bis 1,5 m²/g und

16,0 kg Wolfram-Metallpulver mit folgenden Eigenschaften: W min. 99,95 % (ohne Sauerstoff), Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße (FSSS) 0,7 µm + - 0,1 µm, Klopfdichte 0,150 bis 0,220 dm³/kg, Schüttdichte 0,570 bis 0,740 g/l und 31,5 kg Calcium in Form von Granulat mit folgenden Eigenschaften: Ca min. 99,3 %, Mg max. 0,7 %,
wurden zusammen in einem Mischfass 20 Minuten unter Argonatmosphäre gemischt. Dann wurde das Gemisch in einen Behälter eingetragen. Der Behälter wurde in einen Ofen eingesetzt, der nachfolgend verschlossen und mit Argon bis zu einem Überdruck von 100 hPa gefüllt wurde. Der Reaktionsofen wurde in einer Stunde auf eine Temperatur von ca. 1250 °C aufgeheizt. Sobald die Reaktionsmasse die Temperatur des Ofens erreicht hatte, begann die Reduktionsreaktion:

ZrO₂ +2 Ca + W → ZrW + 2 CaO.

Sechzig Minuten nach dem Einschalten der Ofenheizung wurde diese wieder abgeschaltet. Nachdem die Temperatur auf < 50 C° gefallen war, wurde die Reaktionsmasse aus dem Tiegel entfernt und mit konzentrierter Salzsäure ausgelaugt. Erhalten wurde eine Zirconium/Wolfram-Metallpulverlegierung mit folgender Analyse: 96,1 % Zr + Hf + W, 2,2 % Hf, 0,7 % O, 0,06 % H, 0,38 % Mg, 0,076 % Fe, 0,25 % Al, 1,2 µm mittlere Korngröße, Korngrößenverteilung d50: 2,8 µm, spezifische Oberfläche: 0,5 m²/g, Zündpunkt: 220 °C, Brennzeit: 55 s/50 cm.

### Beispiel 2: Herstellung von Zirconium/Wolfram-Legierungspulver, Zielzusammensetzung 50/50 (ZrW)

16,2 kg ZrO₂ (pulverförmiges Zirconiumoxid) mit folgenden Eigenschaften: ZrO₂ + HfO₂ min. 99,0 %, HfO₂ 1,0 bis 2,0 %, SiO₂ max. 0,2 %, TiO₂ max. 0,25 %, Fe₂O₃ max. 0,02 %, Glühverlust max. 0,4 %, mittlere Korngröße (FSSS) 3 bis 5 µm, Anteil an monocliner Kristalistruktur min. 96 %, spezifische Oberfläche (nach BET) 3,0 bis 4,0 m²/g und
12,0 kg Wolfram-Metallpulver mit folgenden Eigenschaften: W min. 99,95 % (ohne Sauerstoff), Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße (FSSS) 0,7 + - 0,1 µm, Klopfdichte 0,150 bis 0,220 dm³/kg, Schüttdichte 0,570 bis 0,740 g/l und
7,2 kg Mg (Magnesium in Form von Spänen) mit folgenden Eigenschaften: Mg min. 99,5 %, Schüttdichte max. 0,3 bis 0,4 g/cm³
wurden analog Beispiel 1 in einem Behälter in den Ofen eingesetzt. Der Ofen wurde auf 1050 °C aufgeheizt. Sobald die Reaktionsmasse die Temperatur des Ofens erreicht hatte, begann die Reduktionsreaktion:

ZrO₂ + 2Mg + W → ZrW + 2MgO

Die Ofenheizung wurde 20 Minuten nach Start der Reduktion abgeschaltet. Nachdem die Temperatur auf < 50 °C gefallen war, wurde die Reaktionsmasse aus dem Tiegel entfernt und mit konzentrierter, Salzsäure ausgelaugt. Erhalten wurde eine Zirconium/Wolfram-Metallpulverlegierung mit folgender Analyse: 97,9% Zr + Hf + W, 53 % Zr, 0,9 % Hf, 44 % W, 0,083 % Fe, 0,075 % Al, 0,19 % Mg, 0,087 % Si, 0,04 % H, mittlere Korngröße 1,2 µm, Korngrößenverteilung d50: 2,6 µm, Zündpunkt: 200 °C, Brennzeit: 44 s/50 cm.

### Beispiel 3: Herstellung von Zirconium/Wolfram-Legierungspulver, Zielzusammensetzung 40/60 (ZrW)

13,0 kg ZrO₂ (pulverförmiges Zirconiumoxid) mit folgenden Eigenschaften: ZrO₂ + HfO₂ min. 99,0 %, HfO₂ 1,0 bis 2,0 %, SiO₂ max. 0,2 %, TiO₂ max. 0,25 %, Fe₂O₃ max. 0,02 %, Glühverlust max. 0,4 %, mittlere Korngröße (FSSS) 3 bis 5 µm, Anteil an monocliner Kristallstruktur min. 96 %, spezifische Oberfläche (nach BET) 3,0 bis 4,0 m²/g) und
14,4 kg W Metallpulver mit folgenden Eigenschaften: W min. 99,95 % (ohne Sauerstoff), Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße (FSSS) 0,7 + - 0,1 µm, Klopfdichte 0,150 bis 0,220 dm³/kg, Schüttdichte 0,570 bis 0,740 g/l und
5,8 kg Mg (Magnesium in Form von Spänen) mit folgenden Eigenschaften: Mg min. 99,5 %, Schüttdichte max. 0,3 bis 0,4 g/cm³
wurden analog Beispiel 1 in einem Behälter in den Ofen eingesetzt. Der Ofen wurde auf 1050 °C aufgeheizt. Sobald die Reaktionsmasse die Temperatur des Ofens erreicht hatte, begann die Reduktionsreaktion:

ZrO₂ + 2 Mg + W → ZrW + 2MgO

Die Ofenheizung wurde 20 Minuten nach Start der Reduktion abgeschaltet. Nachdem die Temperatur auf < 50 °C gefallen war, wurde die Reaktionsmasse aus dem Tiegel entfernt und mit konzentrierter Salzsäure ausgelaugt. Erhalten wurde eine Zirconium/Wolfram-Metallpulverlegierung mit folgender Analyse: 97,8 % Zr + Hf + W, 41 % Zr, 0,78 % Hf, 56 % W, 0,028 % Fe, 0,090 % Al, 0,14 % Mg, 0,097 % Si, 0,14 % H, 1,2 µm mittlere Korngröße, Korngrößenverteilung d50: 2,2 µm, Zündpunkt: 200 °C, Brennzeit: 37 s/50 cm.

## Patentansprüche

1. Verfahren zur Herstellung von Legierungspulvern auf der Basis von Zirconium legiert mit W, bei dem 21,6 kg ZrO₂ mit folgenden Eigenschaften: ZrO₂ + HfO₂ min. 99,0%, HfO₂ 1,0 bis 2,0 %, SiO₂ max. 0,5 %, TiO₂ max. 0,3 %, Fe₂O₃ max. 0,1 %, Glühverlust max. 0,5 %, mittlere Korngröße 4 bis 6 µm, Anteil an monocliner Kristallstruktur min. 96 %, spezifische Oberfläche 0,5 bis 1,5 m²/g und 16,0 kg Wolfram-Metallpulver mit folgenden Eigenschaften: W min. 99,95 %, Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße 0,7 µm ± 0,1 µm, Klopfdichte 0,150 bis 0,220 dm³/kg, Schüttdichte 0,570 bis 0,740 g/l und 31,5 kg Calcium in Form von Granulat mit folgenden Eigenschaften: Ca min. 99,3 %, Mg max. 0,7 %, zusammen in einem Mischfass 20 Minuten unter Argonatmosphäre gemischt und das Gemisch in einen Behälter eingetragen, der Behälter in einen Ofen eingesetzt, der nachfolgend verschlossen und mit Argon bis zu einem Überdruck von 100 hPa gefüllt wird, wobei der Reaktionsofen in einer Stunde auf eine Temperatur von ca. 1250 °C aufgeheizt, sechzig Minuten nach dem Einschalten der Ofenheizung diese wieder abgeschaltet und nachdem die Temperatur auf < 50 C° gefallen ist, die Reaktionsmasse aus dem Tiegel entfernt und mit konzentrierter Salzsäure ausgelaugt wird, wobei eine Zirconium/Wolfram-Metallpulverlegierung erhalten wird mit folgender Analyse: 96,1 % Zr + Hf + W, 2,2 % Hf, 0,7 % O, 0,06 % H, 0,38 % Mg, 0,076 % Fe, 0,25 % Al, 1,2 µm mittlere Korngröße, Korngrößenverteilung d₅₀: 2,8 µm, spezifische Oberfläche: 0,5 m²/g, Zündpunkt: 220 °C, Brennzeit: 55 s/50 cm.

2. Verfahren zur Herstellung von Legierungspulvern auf der Basis von Zirconium legiert mit W, bei dem 16,2 kg ZrO₂ mit folgenden Eigenschaften: ZrO₂ + HfO₂ min. 99,0 %, HfO₂ 1,0 bis 2,0 %, SiO₂ max. 0,2 %, TiO₂ max. 0,25 %, Fe₂O₃ max. 0,02 %, Glühverlust max. 0,4 %, mittlere Korngröße 3 bis 5 µm, Anteil an monocliner Kristalistruktur min. 96 %, spezifische Oberfläche 3,0 bis 4,0 m²/g und 12,0 kg Wolfram-Metallpulver mit folgenden Eigenschaften: W min. 99,95 %, Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße 0,7 ± 0,1 µm, Klopfdichte 0,150 bis 0,220 dm³/kg, Schüttdichte 0,570 bis 0,740 g/l und 7,2 kg Mg in Form von Spänen mit folgenden Eigenschaften: Mg min. 99,5 %, Schüttdichte max. 0,3 bis 0,4 g/cm³, zusammen in einem Mischfass 20 Minuten gemischt und in einem Behälter in einen Ofen eingesetzt, der nachfolgend verschlossen und mit Argon bis zu einem Überdruck von 100 hPa gefüllt wird, wobei der Reaktionsofen in einer Stunde auf eine Temperatur von 1050°C aufgeheizt, sechzig Minuten nach dem Einschalten der Ofenheizung diese wieder abgeschaltet und nachdem die Temperatur auf < 50 °C gefallen ist, die Reaktionsmasse aus dem Tiegel entfernt und mit konzentrierter Salzsäure ausgelaugt wird, wobei eine Zirconium/Wolfram-Metallpulverlegierung erhalten wird mit folgender Analyse: 97,9% Zr + Hf + W, 53 % Zr, 0,9 % Hf, 44 % W, 0,083 % Fe, 0,075 % Al, 0,19 % Mg, 0,087 % Si, 0,04 % H, mittlere Korngröße 1,2 µm, Korngrößenverteilung d₅₀: 2,6 µm, Zündpunkt: 200 °C, Brennzeit: 44 s/50 cm.

3. Verfahren zur Herstellung von Legierungspulvern auf der Basis von Zirconium legiert mit W, bei dem 13,0 kg ZrO₂ mit folgenden Eigenschaften: ZrO₂ + HfO₂ min. 99,0 %, HfO₂ 1,0 bis 2,0 %, SiO₂ max. 0,2 %, TiO₂ max. 0,25 %, Fe₂O₃ max. 0,02 %, Glühverlust max. 0,4 %, mittlere Korngröße 3 bis 5 µm, Anteil an monocliner Kristallstruktur min. 96 %, spezifische Oberfläche 3,0 bis 4,0 m²/g und 14,4 kg W Metallpulver mit folgenden Eigenschaften: W min. 99,95 %, Sauerstoff max. 0,5 %, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, durchschnittliche Partikelgröße 0,7 ± 0,1 µm, Klopfdichte 0,150 bis 0,220 dm³/kg, Schüttdichte 0,570 bis 0,740 g/l und 5,8 kg Mg in Form von Spänen mit folgenden Eigenschaften: Mg min. 99,5 %, Schüttdichte max. 0,3 bis 0,4 g/cm³, zusammen in einem Mischfass 20 Minuten unter Argonatmosphäre gemischt und in einem Behälter in einen Ofen eingesetzt, der nachfolgend verschlossen und mit Argon bis zu einem Überdruck von 100 hPa gefüllt wird, wobei der Reaktionsofen in einer Stunde auf eine Temperatur von 1050 °C aufgeheizt, sechzig Minuten nach dem Einschalten der Ofenheizung diese wieder abgeschaltet und nachdem die Temperatur auf < 50 °C gefallen ist, die Reaktionsmasse aus dem Tiegel entfernt und mit konzentrierter Salzsäure ausgelaugt wird, wobei eine Zirconium/Wolfram-Metallpulverlegierung erhalten wird mit folgender Analyse: 97,8 % Zr + Hf + W, 41 % Zr, 0,78 % Hf, 56 % W, 0,028 % Fe, 0,090 % Al, 0,14 % Mg, 0,097 % Si, 0,14 % H, 1,2 µm mittlere Korngröße, Korngrößenverteilung d₅₀: 2,2 µm, Zündpunkt: 200 °C, Brennzeit: 37 s/50 cm.

## Claims

1. A process for producing alloy powders based on zirconium, alloyed with W, in which 21.6 kg ZrO₂ having the following properties: ZrO₂ + HfO₂ min. 99.0%, HfO₂ 1.0 to 2.0%, SiO₂ max. 0.5%, TiO₂ max. 0.3%, Fe₂O₃ max. 0.1%, ignition loss max. 0.5%, average particle size 4 to 6 *µ*m, proportion of monoclinal crystal structure min. 96%, specific surface area 0.5 to 1.5 m²/g, and 16.0 kg tungsten metal powder having the following properties: W min. 99.95%, oxygen max. 0.5%, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, average particle size 0.7 *µ*m ± 0.1 *µ*m, tapped density 0.150 to 0.220 dm³/kg, bulk density 0.570 to 0.740 g/l, and 31.5 kg calcium in granular form having the following properties: Ca min. 99.3%, Mg max. 0.7%, are mixed together in a mixing vessel for 20 minutes under an argon atmosphere, and the mixture is introduced into a container, the container is inserted into an oven, which is subsequently sealed and filled with argon to an excess pressure of 100 hPa, wherein the reaction oven is heated to a temperature of approximately 1250°C over one hour, sixty minutes after the oven heating is switched on it is switched off again, and, once the temperature has fallen to < 50°C, the reaction mass is removed from the crucible and leached with concentrated hydrochloric acid, wherein a zirconium/tungsten metal powder alloy with the following analysis is obtained: 96.1% Zr + Hf + W, 2.2% Hf, 0.7% O, 0.06% H, 0.38% Mg, 0.076% Fe, 0.25% Al, 1.2 *µ*m average particle size, particle size distribution d₅₀: 2.8 *µ*m, specific surface area: 0.5 m²/g, ignition temperature: 220°C, burning time: 55 s/50 cm.

2. A process for producing alloy powders based on zirconium, alloyed with W, in which 16.2 kg ZrO₂ having the following properties: ZrO₂ + HfO₂ min. 99.0%, HfO₂ 1.0 to 2.0%, SiO₂ max. 0.2%, TiO₂ max. 0.25%, Fe₂O₃ max. 0.02%, ignition loss max. 0.4%, average particle size 3 to 5 *µ*m, proportion of monoclinal crystal structure min. 96%, specific surface area 3.0 to 4.0 m²/g, and 12.0 kg tungsten metal powder having the following properties: W min. 99.95%, oxygen max. 0.5%, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, average particle size 0.7 *µ*m ± 0.1 *µ*m, tapped density 0.150 to 0.220 dm³/kg, bulk density 0.570 to 0.740 g/l, and 7.2 kg Mg in the form of chips having the following properties: Mg min. 99.5%, bulk density max. 0.3 to 0.4 g/cm³, are mixed together in a mixing vessel for 20 minutes and in a container inserted into an oven, which is subsequently sealed and filled with argon to an excess pressure of 100 hPa, wherein the reaction oven is heated to a temperature of 1050°C over one hour, sixty minutes after the oven heating is switched on it is switched off again, and, once the temperature has fallen to < 50°C, the reaction mass is removed from the crucible and leached with concentrated hydrochloric acid, wherein a zirconium/tungsten metal powder alloy with the following analysis is obtained: 97.9% Zr + Hf + W, 53% Zr, 0.9% Hf, 44% W, 0.083% Fe, 0.075% Al, 0.19% Mg, 0.087% Si, 0.04% H, 1.2 *µ*m average particle size, particle size distribution d₅₀: 2.6 *µ*m, ignition temperature: 200°C, burning time: 44 s/50 cm.

3. A process for producing alloy powders based on zirconium, alloyed with W, in which 13.0 kg ZrO₂ having the following properties: ZrO₂ + HfO₂ min. 99.0%, HfO₂ 1.0 to 2.0%, SiO₂ max. 0.2%, TiO₂ max. 0.25%, Fe₂O₃ max. 0.02%, ignition loss max. 0.4%, average particle size 3 to 5 *µ*m, proportion of monoclinal crystal structure min. 96%, specific surface area 3.0 to 4.0 m²/g, and 14.4 kg W metal powder having the following properties: W min. 99.95%, oxygen max. 0.5%, Al max. 10 ppm, Cr max. 80 ppm, Cu max. 5 ppm, Fe max. 100 ppm, Mo max. 100 ppm, Na max. 20 ppm, Ni max. 100 ppm, Si max. 30 ppm, average particle size 0.7 *µ*m ± 0.1 *µ*m, tapped density 0.150 to 0.220 dm³/kg, bulk density 0.570 to 0.740 g/ and 5.8 kg Mg in the form of chips having the following properties: Mg min. 99.5%, bulk density max. 0.3 to 0.4 g/cm³, are mixed together in a mixing vessel for 20 minutes under an argon atmosphere and in a container inserted into an oven, which is subsequently sealed and filled with argon to an excess pressure of 100 hPa, wherein the reaction oven is heated to a temperature of 1050°C over one hour, sixty minutes after the oven heating is switched on it is switched off again, and, once the temperature has fallen to < 50°C, the reaction mass is removed from the crucible and leached with concentrated hydrochloric acid, wherein a zirconium/tungsten metal powder alloy with the following analysis is obtained: 97.8% Zr + Hf + W, 41% Zr, 0.78% Hf, 56% W, 0.028% Fe, 0.090% Al, 0.14% Mg, 0.097% Si, 0.14% H, 1.2 *µ*m average particle size, particle size distribution d₅₀: 2.2 *µ*m, ignition temperature: 200°C, burning time: 37 s/50 cm.

## Revendications

1. Procédé de fabrication d'alliage en poudre, à base de zirconium allié à du tungstène, dans lequel on mélange ensemble dans une cuve à mélanger, durant 20 minutes et sous atmosphère d'argon,
- 21,6 kg de ZrO₂ présentant les propriétés suivantes : une teneur en ZrO₂ + HfO₂ d'au moins 99,0 %, des teneurs en HfO₂ de 1,0 à 2,0 %, en SiO₂ d'au plus 0,5 %, en TiO₂ d'au plus 0,3 %, et en Fe₂O₃ d'au plus 0,1 %, une perte au feu d'au plus 0,5 %, une taille moyenne de grains de 4 à 6 µm, une fraction de structure cristalline monoclinique d'au moins 96 %, et une aire spécifique de 0,5 à 1,5 m²/g;
- 16,0 kg de tungstène métal en poudre présentant les propriétés suivantes : une teneur en W d'au moins 99,95 %, une teneur en oxygène d'au plus 0,5 %, des teneurs en Al d'au plus 10 ppm, en Cr d'au plus 80 ppm, en Cu d'au plus 5 ppm, en Fe d'au plus 100 ppm, en Mo d'au plus 100 ppm, en Na d'au plus 20 ppm, en Ni d'au plus 100 ppm, et en Si d'au plus 30 ppm, une taille moyenne de particules de 0,7 ± 0,1 µm, un volume massique après tassement de 0,150 à 0,220 dm³/kg, et une masse volumique apparente de 0,570 à 0,740 g/L ;
- et 31,5 kg de calcium à l'état de granulat, présentant les propriétés suivantes : une teneur en Ca d'au moins 99,3 % et une teneur en Mg d'au plus 0,7 % ;
et l'on met le mélange dans un récipient qu'on place dans un four qui est ensuite fermé, puis rempli avec de l'argon jusqu'à une surpression de 100 hPa ; on chauffe le four de réaction, en 1 heure, jusqu'à une température d'environ 1250 °C, et soixante minutes après avoir mis en marche le chauffage du four, on coupe à nouveau celui-ci ; après que la température est retombée à moins de 50 °C, on retire du creuset la masse réactionnelle et on la lessive avec de l'acide chlorhydrique concentré, et l'on obtient un alliage métallique zirconium/tungstène en poudre dont l'analyse donne les résultats suivants : 96,1 % de Zr + Hf + W, 2,2 % de Hf, 0,7 % de O, 0,06 % de H, 0,38 % de Mg, 0,076 % de Fe, 0,25 % de Al, une taille moyenne de grains de 1,2 µm, un paramètre d₅₀ de distribution des tailles de grains de 2,8 µm, une aire spécifique de 0,5 m²/g, un point d'inflammation de 220 °C, et un temps de combustion de 55 s/50 cm.

2. Procédé de fabrication d'alliage en poudre, à base de zirconium allié à du tungstène, dans lequel on mélange ensemble dans une cuve à mélanger, durant 20 minutes,
- 16,2 kg de ZrO₂ présentant les propriétés suivantes : une teneur en ZrO₂ + HfO₂ d'au moins 99,0 %, des teneurs en HfO₂ de 1,0 à 2,0 %, en SiO₂ d'au plus 0,2 %, en TiO₂ d'au plus 0,25 %, et en Fe₂O₃ d'au plus 0,02 %, une perte au feu d'au plus 0,4 %, une taille moyenne de grains de 3 à 5 µm, une fraction de structure cristalline monoclinique d'au moins 96 %, et une aire spécifique de 3,0 à 4,0 m²/g ;
- 12,0 kg de tungstène métal en poudre présentant les propriétés suivantes : une teneur en W d'au moins 99,95 %, une teneur en oxygène d'au plus 0,5 %, des teneurs en Al d'au plus 10 ppm, en Cr d'au plus 80 ppm, en Cu d'au plus 5 ppm, en Fe d'au plus 100 ppm, en Mo d'au plus 100 ppm, en Na d'au plus 20 ppm, en Ni d'au plus 100 ppm, et en Si d'au plus 30 ppm, une taille moyenne de particules de 0,7 ± 0,1 µm, un volume massique après tassement de 0,150 à 0,220 dm³/kg, et une masse volumique apparente de 0,570 à 0,740 g/L ;
- et 7,2 kg de magnésium en copeaux, présentant les propriétés suivantes : une teneur en Mg d'au moins 99,5 % et une masse volumique apparente d'au plus 0,3 à 0,4 g/cm³ ;
et l'on met le mélange, placé dans un récipient, dans un four qui est ensuite fermé, puis rempli avec de l'argon jusqu'à une surpression de 100 hPa ; on chauffe le four de réaction, en 1 heure, jusqu'à une température de 1050 °C, et soixante minutes après avoir mis en marche le chauffage du four, on coupe à nouveau celui-ci ; après que la température est retombée à moins de 50 °C, on retire du creuset la masse réactionnelle et on la lessive avec de l'acide chlorhydrique concentré, et l'on obtient un alliage métallique zirconium/tungstène en poudre dont l'analyse donne les résultats suivants : 97,9 % de Zr + Hf + W, 53 % de Zr, 0,9 % de Hf, 44 % de W, 0,083 % de Fe, 0,075 % d Al, 0,19 % de Mg, 0,087 % de Si, 0,04 % de H, une taille moyenne de grains de 1,2 µm, un paramètre d₅₀ de distribution des tailles de grains de 2,6 µm, un point d'inflammation de 200 °C, et un temps de combustion de 44 s/50 cm.

3. Procédé de fabrication d'alliage en poudre, à base de zirconium allié à du tungstène, dans lequel on mélange ensemble dans une cuve à mélanger, durant 20 minutes et sous atmosphère d'argon,
- 13,0 kg de ZrO₂ présentant les propriétés suivantes : une teneur en ZrO₂ + HfO₂ d'au moins 99,0 %, des teneurs en HfO₂ de 1,0 à 2,0 %, en SiO₂ d'au plus 0,2 %, en TiO₂ d'au plus 0,25 %, et en Fe₂O₃ d'au plus 0,02 %, une perte au feu d'au plus 0,4 %, une taille moyenne de grains de 3 à 5 µm, une fraction de structure cristalline monoclinique d'au moins 96 %, et une aire spécifique de 3,0 à 4,0 m²/g ;
- 14,4 kg de tungstène métal en poudre présentant les propriétés suivantes : une teneur en W d'au moins 99,95 %, une teneur en oxygène d'au plus 0,5 %, des teneurs en Al d'au plus 10 ppm, en Cr d'au plus 80 ppm, en Cû d'au plus 5 ppm, en Fe d'au plus 100 ppm, en Mo d'au plus 100 ppm, en Na d'au plus 20 ppm, en Ni d'au plus 100 ppm, et en Si d'au plus 30 ppm, une taille moyenne de particules de 0,7 ± 0,1 µm, un volume massique après tassement de 0,150 à 0,220 dm³/kg, et une masse volumique apparente de 0,570 à 0,740 g/L ;
- et 5,8 kg de magnésium en copeaux, présentant les propriétés suivantes : une teneur en Mg d'au moins 99,5 % et une masse volumique apparente d'au plus 0,3 à 0,4 g/cm³ ;
et l'on met le mélange, placé dans un récipient, dans un four qui est ensuite fermé, puis rempli avec de l'argon jusqu'à une surpression de 100 hPa ; on chauffe le four de réaction, en 1 heure, jusqu'à une température de 1050 °C, et soixante minutes après avoir mis en marche le chauffage du four, on coupe à nouveau celui-ci ; après que la température est retombée à moins de 50 °C, on retire du creuset la masse réactionnelle et on la lessive avec de l'acide chlorhydrique concentré, et l'on obtient un alliage métallique zirconium/tungstène en poudre dont l'analyse donne les résultats suivants : 97,8 % de Zr + Hf + W, 41 % de Zr, 0,78 % de Hf, 56 % de W, 0,028 % de Fe, 0,090 % de Al, 0,14 % de Mg, 0,097 % de Si, 0,14 % de H, une taille moyenne de grains de 1,2 µm, un paramètre d₅₀ de distribution des tailles de grains de 2,2 µm, un point d'inflammation de 200 °C, et un temps de combustion de 37 s/50 cm.
